# NEUE EUROPÄISCHE PATENTSCHRIFT

(11) **EP 3 419 837 B2**
(45) Veröffentlichungstag und Bekanntmachung des Hinweises auf die Entscheidung über den Einspruch: **02.08.2023**
(45) Hinweis auf die Patenterteilung: 31.07.2019
(21) Anmeldenummer: 17706462.3
(22) Anmeldetag: 21.02.2017
(51) Int. Cl.: B60B 35/00, B60B 35/04

(54) **ACHSSYSTEM**
AXLE SYSTEM
SYSTÈME D'ESSIEU

(30) Priorität: 25.02.2016 DE 102016103306
(43) Veröffentlichungstag der Anmeldung: 02.01.2019
(73) Patentinhaber: SAF-HOLLAND GmbH, 63856 Bessenbach (DE)
(72) Erfinder: KHOURY, Jean, 63303 Dreieich (DE); NAGEL, Christopher, 63762 Großostheim (DE)
(74) Vertreter: Müller Schupfner & Partner Patent- und Rechtsanwaltspartnerschaft mbB
(86) Internationale Anmeldenummer: PCT/EP2017/053903
(87) Internationale Veröffentlichungsnummer: WO 2017/144448

(56) Entgegenhaltungen:
- EP-A1- 2 363 302
- EP-A1- 2 821 263
- EP-B1- 0 625 440
- EP-B1- 1 273 464
- DE-U1-202015 101 308
- US-A- 3 434 707
- US-A1- 2010 044 991

## Beschreibung

Die vorliegende Erfindung betrifft ein Achssystem zum Einsatz in Nutzfahrzeugen sowie ein Verfahren zur Herstellung eines Achssystems.

Achssysteme für Nutzfahrzeuge sind aus dem Stand der Technik bekannt. Insbesondere ist es bekannt, Längslenker des Fahrwerks eines Nutzfahrzeugs an einem Achsrohr mittels eines oder mehrerer Klemmelemente festzulegen. Dabei hat es sich im Stand der Technik bisher bewährt, U-förmige Zugelemente zu verwenden, welche über an den Zugelementen eingreifende Muttern unter Zugspannung gesetzt werden und auf diese Weise Halteelemente gegen den Lenker und das Achsrohr pressen, um den Lenker am Achsrohr festzulegen. Nachteilig bei den aus dem Stand der Technik bekannten Achssystemen ist dabei, dass zum einen das Gewicht der Befestigungssysteme für einen Längslenker an einem Achsrohr sehr hoch ist. Weiterhin ist eine große Anzahl von Bauteilen erforderlich, welche jeweils von verschiedenen Seiten aus an die Baugruppe aus Lenkerelement und Achsrohr herangeführt und mit dieser Baugruppe in Wirkverbindung gesetzt werden müssen.

Die EP 2 821 263 A1 betrifft eine Achse mit einem Achsrohr und wenigstens einem Achslenker, der mit dem Achsrohr über ein Kraftübertragungsmittel verbunden ist.

Die DE 20 2015 101 308 U1 betrifft eine Radachsaufhängung mit einem Achskörper, einem flexiblen Längslenker und einem Klemmbügel, welcher den Achskörper an dem Längslenker festlegt.

Die US 3,386,724 zeigt ein Achssystem mit einem Lenkerelement und einer Klemmeinheit, wobei das Lenkerelement über U-Bügel an dem Achselement festgelegt ist.

Aufgabe der vorliegenden Erfindung ist es, ein Achssystem bereitzustellen, welches die Nachteile aus dem Stand der Technik beseitigt und dabei insbesondere eine Gewichtsreduzierung und die Anzahl gleichzeitig von einem Monteur zu handhabender Bauteile reduziert.

Diese Aufgabe wird mit einem Achssystem gemäß Anspruch 1, 6 und Anspruch 8 gelöst. Weiterhin wird die Aufgabe durch das Verfahren zur Herstellung eines Achssystems gemäß Anspruch 14 gelöst. Weitere Vorteile und Merkmale der vorliegenden Erfindung ergeben sich aus den abhängigen Ansprüchen.

Erfindungsgemäß umfasst das Achssystem ein Lenkerelement und eine Klemmeinheit, wobei die Klemmeinheit ein Basiselement und ein Klemmelement aufweist, wobei das Basiselement im Wesentlichen auf einer ersten Seite und das Klemmelement auf der, der ersten Seite gegenüberliegenden, zweiten Seite des Lenkerelements angeordnet ist, wobei das Basiselement an einem Achselement festlegbar oder festgelegt ist, wobei ein Zugelement vorgesehen ist, welches ausgelegt ist, eine Zugkraft zwischen dem Klemmelement und dem Basiselement aufzubringen, derart dass das Lenkerelement kraftschlüssig zwischen dem Klemmelement und dem Basiselement gehalten ist. Das Lenkerelement ist vorzugsweise der Längslenker eines Nutzfahrzeugs und dabei insbesondere bevorzugt aus Federstahl ausgebildet. Als Lenkerelement im Sinne der vorliegenden Erfindung können dabei Lenkerfedern mit einem vorzugsweise rechteckigen Querschnitt vorgesehen sein, wobei das Lenkerelement mit Vorteil aus gewalztem Federstrahl oder aus besonders elastisch verformbaren Gussmaterial ausgebildet ist. Weiterhin ist eine Klemmeinheit vorgesehen, welche zur Festlegung des Lenkerelements relativ zu einem Achselement ausgebildet ist. Die Klemmeinheit ist dabei vorzugsweise zumindest zweiteilig ausgebildet, wobei ein Basiselement und ein Klemmelement vorgesehen sind. Das Basiselement ist mit anderen Worten ein Adapterelement, welches zum einen an dem Achsrohr festgelegt oder festlegbar ist und zum anderen eine Kontaktfläche aufweist, an welcher das Lenkerelement anordenbar und kraftschlüssig in Eingriff bringbar ist. Die erste Seite des Lenkerelements ist dabei im Einsatz des Nutzfahrzeugs vorzugsweise die Unterseite bzw. die Seite des Lenkerelements, welche zum Achselement hingewandt ist. Weiterhin ist ein Klemmelement der Klemmeinheit vorgesehen, welches auf der, der ersten Seite gegenüber liegenden, zweiten Seite des Lenkerelements angeordnet ist und von dieser Seite aus eine Haltekraftauf das Lenkerelement ausübt. Die zweite Seite des Lenkerelements ist entsprechend vorzugsweise die dem Achselement abgewandte Seite. Um das Klemmelement in Richtung des Basiselements gegen das Lenkerelement zu zwingen, ist ein Zugelement vorgesehen, welches eine elastische Vorspannkraft auf das Klemmelement überträgt und dabei das Klemmelement gegen das Lenkerelement sowie gegen das Basiselement zwingt oder drückt. Das Zugelement ist vorzugsweise ein Bolzen mit einem Schraubenkopf oder ein Bolzen mit einer Mutter, welche dafür ausgelegt sind, eine entsprechende Längskraft oder Zugkraft zwischen dem Klemmelement und dem Basiselement zu etablieren. Die kraftschlüssige Verbindung der Klemmeinheit mit dem Lenkerelement entsteht dabei vorzugsweise durch eine Kombination der elastischen Verformung und entsprechenden Rückstellkraft des Zugelements und einer Biegeverformung des Klemmelements, die in einer entsprechenden Rückstellkraft resultiert. Es versteht sich hierbei, dass insbesondere das Klemmelement, das Basiselement und das Zugelement aus Werkstoffen mit einem möglichst großen elastischen Verformungsanteil hergestellt sind, so dass insbesondere plastische Verformung dieser Bauteile verhindert werden kann und insbesondere der Vorgang des Fließens mit einer ausreichend hohen Sicherheit vermieden wird. Mit Vorteil umgreifen dabei die Klemmelemente lediglich das Lenkerelement, nicht aber das Achselement, wodurch die Größe bzw. die Länge der Klemmelemente besonders gering gehalten werden kann. Hierdurch ist es möglich, das Gewicht der Klemmeinheit und somit das Gesamtgewicht des Achssystems deutlich zu reduzieren.

Gemäß einem Aspekt der Erfindung weist das Klemmelement einen ersten Stützabschnitt und einen zweiten Stützabschnitt auf, wobei der erste Stützabschnitt an der zweiten Seite des Lenkers sich abstützend zur Anlage bringbar ist und wobei der zwei Stützabschnitt an einer Haltefläche am Basiselement sich abstützend zur Anlage bringbar ist, wobei das Zugelement im Wesentlichen zwischen dem ersten und dem zweiten Stützabschnitt an dem Klemmelement in Eingriff bringbar ist. Mit Vorteil weist das Klemmelement zwei Stützabschnitte auf, die jeweils vorzugsweise als Anlageflächen zur sich abstützenden Anlage am Lenker und am Basiselement ausgebildet sind. Die Stützabschnitte sind mit Vorteil voneinander beabstandet, wobei zwischen den Stützabschnitten vorzugsweise der Kraftübertragungsbereich des Zugelements an das Klemmelement angeordnet ist. Auf diese Weise ist das Klemmelement im physikalischen Sinne vorzugsweise als Biegebalken anzusehen, welcher an zwei voneinander beabstandeten Abstützstellen Kräfte in einer ersten Richtung aufnimmt und an einem Punkt zwischen diesen beiden Abstützstellen mit einer entgegengesetzt zu den beiden Kräften wirkenden Kraft beaufschlagt ist. Durch die hierbei erzeugte Verbiegung des Klemmelements entsteht eine elastische Rückstellkraft, welche wiederum die entsprechende Haltekraft im ersten Stützabschnitt auf das Lenkerelement überträgt. Im Vergleich zu den aus dem Stand der Technik bekannten Elementen zur Aufbringung einer Klemmkraft zwischen Lenkerelement und Achsrohr oder Lenkerelement und einem dazwischen angeordneten Basiselement, ist die hier bevorzugt vorgesehene Anordnung besonders kompakt ausgebildet, da insbesondere die Klemmelemente nur eine sehr geringe Erstreckung aufweisen und insbesondere nicht das Achsrohr umfassen. Die Formulierung, dass das Zugelement im Wesentlichen zwischen dem ersten und dem zweiten Stützabschnitt mit dem Klemmelement in form- und kraftschlüssigen Eingriff bringbar ist, bedeutet im Rahmen der vorliegenden Erfindung, dass die Kraftübertragungspunkte des ersten und des zweiten Stützabschnitts, sowie der Kraftübertragungspunkt zwischen dem Zugelement und dem Klemmelement in einer gemeinsamen Geraden oder Ebene liegen, wobei die Stützabschnitte jeweils außen liegen. Bevorzugt spannen die Stützabschnitte gemeinsam mit dem Kraftübertragungspunkt zwischen dem Zug- und dem Klemmelement ein Dreieck auf, dessen größer Winkel vorzugsweise im Bereich des Zugelements vorgesehen ist. Dabei ist mit anderen Worten der Kraftübertragungsbereich des Zugelements an das Klemmelement jeweils zwischen den außen liegenden Stützabschnitten angeordnet. Als Kraftübertragungspunkte werden im vorliegenden Zusammenhang insbesondere mittlere Kraftübertragungspunkte angesehen, da es sich bei den Kraftübertragungsbereichen in der Praxis jeweils um Flächen handelt, deren Flächenmittelpunkt als Kraftübertagungspunkt angesehen werden kann. Insbesondere ergibt sich diese Anordnung bei einer Betrachtung des Achssystems in Längsrichtung des Lenkerelements und der quer hierzu liegenden Schnittebene.

Weiterhin bevorzugt weist in einem montierten Zustand des Achssystems der erste Stützabschnitt einen mittleren Abstand von der Längsachse des Zugelements auf, wobei im montierten Zustand des Achssystems der zweite Stützabschnitt einen mittleren Abstand von der Längsachse des Zugelements aufweist, wobei das Verhältnis zwischen dem mittleren Abstand des ersten Stützabschnitts und dem mittleren Abstand des zweiten Stützabschnitts zwischen 0,8 und 1,4, vorzugsweise zwischen 0,9 und 1,2 und besonders bevorzugt bei circa 1,1 liegt. Das Verhältnis der mittleren Abstände der Stützabschnitte von der Längsachse des Zugelements ist dabei ein Ausdruck für die Hebelarme in den Bereichen zwischen dem ersten Stützabschnitt und dem zweiten Stützabschnitt. Eine Einstellbarkeit bei der Auslegung des Klemmelements über diesen Faktor ist insbesondere bevorzugt, um einen Kompromiss aus einem ausreichenden großen Hebelarm zur Erreichung einer ausreichend hohen elastischen Verbiegbarkeit, insbesondere um Stöße oder periodische Schwingungen ohne Beschädigung des Materials aufnehmen zu können, und einer andererseits ausreichend hohen Anpresskraft des Klemmelements auf das Lenkerelement, einstellen zu können. Es hat sich dabei im Rahmen der vorliegenden Erfindung gezeigt, dass der Bereich von 0,8 bis 1,4 dieses Verhältnisses für die überwiegende Anzahl von Anordnungen in Nutzfahrzeugen eine ausreichende Festigkeit der Verbindung zwischen Achselement und Lenkerelement ermöglicht. Im Verhältnisbereich von 0,9 bis 1,2 können insbesondere Klemmelemente aus Gussmaterial verwendet werden. Bei einem Verhältnisbereich, der bei circa 1 bis 1,1 liegt, ist insbesondere eine gleichmäßige Spannungsverteilung über den ersten und den zweiten Stützabschnitt gegeben, wobei vorzugsweise auf den zweiten Stützabschnitt eine etwas höhere Anpresskraft wirkt und am ersten Stützabschnitt eine etwas größere elastische Dehnung bzw. elastisehe Verbiegung des Klemmelements möglich ist, um im Betrieb des Nutzfahrzeugs auftretende Schwingungen besser ausgleichen zu können.

Bevorzugt weist das Basiselement einen achsseitigen Eingriffsbereich auf, welcher zur stoffschlüssigen Festlegung des Basiselements am Achselement ausgelegt ist. Insbesondere bevorzugt ist das Basiselement stoffschlüssig am Achselement festgelegt. Hierfür weist das Basiselement vorzugsweise einen achsseitigen Eingriffsbereich auf, welcher insbesondere zur Herstellung einer Schweißverbindung optimiert ist. Hierzu ist der achsseitige Eingriffsbereich mit Vorteil mit zum Achselement hinweisenden Kanten versehen, die derart angefast sind, dass eine besonders einfache Einbringung und gleichmäßige Verteilung von Schweißgut zwischen dem Basiselement und dem Achselement bei der Herstellung einer thermischen Schweißverbindung, möglich ist.

Insbesondere bevorzugt ist der achsseitige Eingriffsbereich als Schweißfenster am Basiselement ausgebildet, wobei eine umlaufende Schweißnaht zwischen dem Basiselement und dem Achselement hergestellt werden kann. Es hat sich gezeigt, dass ein als umlaufende Schweißnaht ausgebildeter stoffschlüssiger Verbindungsbereich zwischen dem Basiselement und dem Achsrohr besonders hohe Festigkeits- und Dauerfestigkeitswerte erreicht. Insbesondere bevorzugt ist der achsseitige Eingriffsbereich oder auch eine Vielzahl von achsseitigen Eingriffsbereichen, auf der Oberseite des Achselements, d.h. vorzugsweise auf der Druckhälfte des Achselements, welche bei einer Biegung des Achselements auf Druck belastet wird, angeordnet. Hierdurch lässt sich die Lebensdauer der Verbindung zwischen Basiselement und Achselement steigern, da im Verbindungsbereich, bzw. im Bereich der Schweißnaht weniger Schubspannung auftritt.

Weiterhin bevorzugt weist das Basiselement zwei achsseitige Eingriffsbereiche auf, welche voneinander getrennt und beabstandet sind, wobei das Basiselement ausschließlich in den achsseitigen Eingriffsbereichen am Achselement festlegbar oder festgelegt ist. Das Basiselement weist vorzugsweise zwei als Schweißfenster ausgebildete achsseitige Eingriffsbereiche auf, die insbesondere nicht miteinander in Verbindung stehen. Somit werden zwischen dem Basiselement und dem Achselement zwei voneinander unabhängige Schweißnähte ausgebildet. Dies vermeidet insbesondere Kerbwirkungen an linienförmigen bzw. stumpf endenden Schweißnähten und ermöglicht so eine besonders feste Verbindung zwischen dem Basiselement und dem Achselement. Darüber hinaus können die die nicht miteinander in Verbindung stehenden Schweißnähte jeweils für sich die Festigkeit der Verbindung zwischen dem Achselement und dem Basiselement gewährleisten, auch für den Fall, dass eine der Schweißnähte versagt. Die Festlegung des Basiselements ausschließlich in den achsseitigen Eingriffsbereichen weist den Vorteil auf, dass zum einen der Fertigungsaufwand gering gehalten wird und zum anderen eine großflächige Beeinträchtigung der Verbindungsbereiche zwischen Basiselement und Achselement durch das Schweißen von Material vermieden werden kann.

Gemäß einem weiteren Aspekt der Erfindung weist das Zugelement ein Außengewinde auf, welches mit einem Gewindeabschnitt in form- und kraftschlüssigen Eingriff bringbar ist, wobei der Gewindeabschnitt am Basiselement vorgesehen ist. Mit anderen Worten ist das Zugelement vorzugsweise als Schraubbolzen ausgeführt, wobei entsprechend der möglichen Befestigungen am Basiselement ein Schraubelement mit oder ohne Kopf zum Einsatz gelangt. Vorzugsweise erstreckt sich das Außengewinde des Zugelements nur über den Bereich, welcher mit dem jeweils gegenüberliegenden Element, also Basiselement oder in Eingriff gelangt, wobei das Zugelement ansonsten gewindefrei ausgebildet ist, um insbesondere eine reine Zugdehnung mit möglichst wenig Kerbwirkung außerhalb des Gewindes zu ermöglichen.

In einer insbesondere bevorzugten Ausführungsform ist der Gewindeabschnitt in einer Bohrung des Basiselements vorgesehen. Diese Ausführungsform zeichnet sich durch eine besonders kompakte Ausbildung des Achssystems aus, da insbesondere auf eine zusätzliche Mutter verzichtet werden kann und lediglich das Zugelement mit seinem Außengewinde in eine mit einem Innengewinde ausgestattete Bohrung des Basiselements einschraubbar ist. Die kompakte Bauweise kann hierbei den Vorteil einer zusätzlich angeordneten Mutter, welche aus Material höherer Festigkeit ausgebildet sein kann und insbesondere leicht auswechselbar ist, in dem Fall aufwiegen, dass der Bauraum am Nutzfahrzeug für das Achssystem begrenzt ist.

In einer alternativen Ausführungsform kann das Zugelement einstückig mit dem Basiselement ausgeführt oder stoff- und/oder formschlüssig an dem Basiselement festgelegt sein, wobei der Gewindeabschnitt an einer separat vorgesehenen Mutter vorgesehen ist, welche am Klemmelement in Eingriff bringbar ist. Eine kompakte Ausbildung des Achssystems wird möglich, wenn das Zugelement einstückig mit dem Basiselement ausgeführt oder vor der Montage des Klemmelements am Basiselement mit dem Basiselement in stoff- und/oder formschlüssigen Eingriff gebracht wird. Vorteil dieser Ausführungsform ist, dass das Zugelement bereits gemeinsam mit dem Basiselement vorgefertigt werden kann und zur Montage des Achssystems lediglich die Mutter an dem Zugelement festgelegt wird, und hierbei nur wenige Bauteile durch einen Monteur zur handhaben sind.

Gemäß einem weiteren Aspekt der Erfindung weist das Achssystem zwei Klemmelemente auf, die einander bezogen auf das Lenkerelement gegenüberliegend angeordnet und mittels je eines Zugelements am Basiselement festlegbar sind. Mit Vorteil ist das Lenkerelement somit auf zwei Seiten, beispielsweise in Längsrichtung des Lenkerelements betrachtet, rechts und links am Lenkerelement durch je ein Klemmelement mit einer Kraft beaufschlagt, welche das Lenkerelement gegen das Basiselement zwingt. Auf diese Weise kann eine höhere Festigkeit der Verbindung des Lenkerelements mit dem Basiselement und somit mit dem Achselement hergestellt werden.

Bevorzugt sind die Klemmelemente als separate Bauteile und im Wesentlichen identisch ausgebildet. Dabei bedeutet eine im wesentlichen identische Ausbildung, dass der erste und der zweite Stützabschnitt und die Bohrung bzw. das Gewinde zum Eingriff des Zugelements identisch ausgebildet sind, während weitere an diese Abschnitte angrenzende Materialbereiche durchaus verschiedene Dimensionen aufweisen können, um beispielsweise an einer Seite des Lenkers eine höhere Anpressung zu erreichen als an der anderen. Der Vorteil der identischen Ausbildung der Klemmelemente ist, dass diese miteinander vertauscht werden können und insbesondere die Fertigung von Lenkerelementen vereinfacht wird, da eine einzige Klemmelementform für verschiedene Anwendungen von Achssystemen Verwendung finden kann. Dabei können die verschiedenen, identisch ausgebildeten Klemmelemente beispielsweise mit verschieden ausgebildeten Basiselementen in Eingriff bringbar sein, um verschieden breite oder hohe Lenkerelemente an Achselementen festzulegen.

Weiterhin bevorzugt sind die Klemmelemente über einen Federabschnitt miteinander verbunden, wobei der Federabschnitt im Vergleich zu den Klemmelementen dünnwandig ausgebildet ist. Der Federabschnitt dient dabei insbesondere dazu, die Handhabbarkeit der Klemmelemente für einen Monteur zu vereinfachen, da mit einem Handgriff gleich zwei Klemmelemente an dem Achssystem angeordnet werden können. Um eine elastische Verformung der Klemmelemente beim Verspannen mit dem Lenkerelement nicht übermäßig zu behindern, ist der Federabschnitt vorzugsweise besonders dünnwandig und dabei elastisch verformbar ausgebildet. Als dünnwandig wird insbesondere eine Wandstärke des Federabschnitts von 0,01 bis 0,1 der Wandstärke des Klemmelements im Bereich der Kraftübertragung vom Klemmelement auf das Lenkerelement angesehen. Insbesondere bevorzugt kann der Federabschnitt dabei als Federstahlblech ausgebildet sein, welches vom Material des Klemmelements umgossen ist. Weiterhin bevorzugt kann der Federabschnitt selbst eine Kontaktfläche mit dem Lenkerelement aufweisen und dabei insbesondere eine weitere Anpressung des Lenkerelements an das Basiselement erreichen.

In einer besonders bevorzugten Ausführungsform sind vier Klemmelemente mittels je eines Zugelements am Basiselement festlegbar oder festgelegt. Bei dieser bevorzugten Ausführungsform wird das Lenkerelement somit an vier Befestigungspunkten mit dem Basiselement in kraftschlüssige Verbindung gebracht. Vorzugsweise sind die Klemmelemente dabei im Wesentlichen identisch ausgebildet, wodurch eine Vertauschbarkeit der Klemmelemente in Bezug auf ihre Einbauposition am Basiselement und auch bezogen auf verschieden große Lenkerelemente ermöglicht wird.

Mit Vorteil ist am Klemmelement eine Bohrung vorgesehen, durch welche hindurch sich das Zugelement erstreckt, wobei die Bohrung als Langloch ausgebildet ist und wobei die längere Sehne des Langlochs eine Sehnenlänge aufweist, die ein 1,1 bis 1,6-faches, vorzugsweise ein 1,1 bis 1,3-faches und besonders bevorzugt ein circa 1,2-faches des Außendurchmessers des Zugelements im Bereich der Bohrung ist. Die Ausführung der Bohrung am Klemmelement als Langloch ermöglicht insbesondere ein Verschwenken des Bereichs des Klemmelements, in dem die Bohrung angeordnet ist, relativ zum Zugelement. Auf diese Weise kann beim Verspannen und der dabei erfolgenden elastischen Verformung des Klemmelements, insbesondere im Bereich des Eingriffs des Zugelements, eine gewisse Verschwenkung des Klemmelements relativ zum Zugelement stattfinden, ohne dass es dabei zu einem Verkanten der Bohrung des Klemmelements mit dem Zugelement kommt. Alternativ zu einem im Wesentlichen zylindrisch oder geradlinig ausgebildeten Langloch könnte das Klemmelement auch eine Bohrung mit einem anfangs abnehmenden und zum Basiselement hin ab einem engsten Punkt wieder zunehmenden Querschnitt aufweisen. Diese Bohrung hat den Vorteil, dass das Material des Klemmelements weniger geschwächt wird. Der Vorteil des geraden Langloches hingegen ist, dass es einfacher Herzustellen ist. Um die Verschwenkbarkeit des Klemmelements relativ zum Zugelement zu vereinfachen, sind die Kontaktflächen des Zugelements und des Klemmelements vorzugsweise ballig ausgebildet, was eine Verschwenkung des Klemmelements relativ zum Zugelement ermöglicht, ohne dass dabei ein Verkanten oder Kerbwirkung im Bereich der Kraftübertragung vom Zugelement auf das Klemmelement stattfindet.

Weiterhin bevorzugt weist das Basiselement eine Haltegeometrie auf, welche im montierten Zustand mit dem Lenkerelement in formschlüssigen Eingriff gelangt und ein Verlagern des Lenkerelements entlang der Längsachse des Lenkerelements relativ zur Klemmeinheit verhindert. Mit Vorteil weist das Basiselement im lenkerseitigen Eingriffsbereich einen Vor- oder Rücksprung auf, welcher mit einem korrespondierenden Vor- oder Rücksprung am Lenkerelement in Eingriff gelangt, um das Lenkerelement relativ zur Klemmeinheit gegen Verlagerung zu sichern. Insbesondere entlang der Achse, entlang derer eine Verlagerung des Lenkerelements relativ zur Klemmeinheit nicht durch den kraftschlüssigen und formschlüssigen Eingriff der Klemmelemente und des Basiselements behindert wird, ist es bevorzugt die Verbindung zwischen Lenkerelement und Achselement zusätzlich durch einen Formschluss zu sichern. Hierzu weist das Basiselement vorzugsweise eine Haltegeometrie auf, welche beispielsweise als einfacher Dorn ausgeführt sein kann, welcher sich bereichsweise in das Material des Lenkerelements eingräbt und auf diese Weise einen Formschluss zwischen dem Basiselement und dem Lenkerelement herstellt. Weiterhin bevorzugt kann am Lenkerelement eine lokale Vertiefung vorgesehen sein, mit welcher ein entsprechend am Basiselement vorgesehener Vorsprung in Eingriff gelangt, um zumindest in einer Richtung einen Formschluss zwischen dem Lenkerelement und dem Basiselement herzustellen.

Weiterhin bevorzugt ist einstückig mit dem Basiselement ein Befestigungsabschnitt zur Festlegung weiterer Komponenten des Fahrwerks eines Nutzfahrzeugs ausgebildet. Mit anderen Worten weist das Basiselement mit Vorteil einen Flanschabschnitt auf, welcher beispielsweise eine Bohrung zur Festlegung eines Stoßdämpfers mittels eines Bolzenelements aufweist.

Erfindungsgemäß ist ein Verfahren zur Herstellung eines Achssystems vorgesehen, welches die Schritte umfasst: Bereitstellen eines Lenkerelements, einer Klemmeinheit und eines Achselements; Verbinden eines Basiselements der Klemmeinheit mit dem Achselement; Platzieren des Lenkerelements an dem Basiselement; Bereitstellen eines Klemmelements der Klemmeinheit und Verklemmen des Klemmelements gegen das Lenkerelement mittels eines mit dem Basiselement in Eingriff stehenden Zugelements. Das Verfahren zur Herstellung eines Achssystems ist dabei vorzugsweise eine Montagereihenfolge, wobei in einer bevorzugten Ausführungsform des Verfahrens die einzelnen Verfahrensschritte in genau der oben genannten Reihenfolge stattfinden. Dabei müssen zunächst nur drei grundlegende Komponenten zur Herstellung des Achssystems bereitgestellt werden: Ein Lenkerelement, eine Klemmeinheit und ein Achselement. Anschließend wird vorzugsweise das Basiselement der Klemmeinheit mit dem Achselement verschweißt. Vorzugsweise im Anschluss daran wird das Lenkerelement am Basiselement platziert, bevorzugt im oder am lenkerseitigen Eingriffsabschnitt des Basiselements. Daraufhin wird zumindest ein Klemmelement der Klemmeinheit bereitgestellt und mittels eines Zugelements gegen das Basiselement verschraubt bzw. verspannt, wobei gleichzeitig das Klemmelement das Lenkerelement gegen das Basiselement verklemmt und so einen Kraftschluss zwischen der Klemmeinheit und dem Lenkerelement herstellt. Mit dem erfindungsgemäßen Verfahren kann ein Achssystem hergestellt werden, bei welchem ein Lenkerelement relativ zu einem Achselement über eine Klemmeinheit festgelegt ist. Es versteht sich, dass einzelne, zuvor beschriebene gegenständliche Merkmale des Achssystems auch das Verfahren zur Herstellung des Achssystems erleichtern können und somit insbesondere für weitere bevorzugte Ausführungsformen des Verfahrens Anwendung finden können.

Mit Vorteil wird das Basiselement am Achselement festgeschweißt. Durch die Herstellung einer Schweißverbindung ist auf einfache Weise ein fester Stoffschluss zwischen dem Basiselement und dem Achselement herstellbar, wobei im Anschluss daran ein Kraft- und Formschluss des Lenkerelements mit dem Basiselement und somit indirekt auch mit dem Achselement durch das Anschrauben eines oder mehrerer Klemmelemente an dem Basiselement herstellbar ist.

Weitere Vorteile und Merkmale der vorliegenden Erfindung ergeben sich aus der nachfolgenden Beschreibung mit Bezug auf die beigefügten Figuren. Es versteht sich dabei, dass einzelne in nur einer der gezeigten Ausführungsformen offenbarte Merkmale auch in anderen Ausführungsformen zum Einsatz gelangen können, sofern dies nicht explizit ausgeschlossen wird oder sich aufgrund technischer Gegebenheiten verbietet. Es zeigen:
- Fig. 1: eine perspektivische Ansicht einer Klemmeinheit des erfindungsgemäßen Achssystems;
- Fig. 2: eine Seitenansicht des erfindungsgemäßen Achssystems entlang der Lenkerlängsrichtung ;
- Fig. 3: eine teilweise geschnittene Detailansicht der in Fig. 2 gezeigten Ausführungsform;
- Fig. 4: eine Draufsicht auf das bereits in Fig. 1 gezeigte Achssystem; und
- Fig. 5: eine Ansicht einer Ausführungsform des erfindungsgemäßen Achssystems längs der Rohrachse des Achselements.

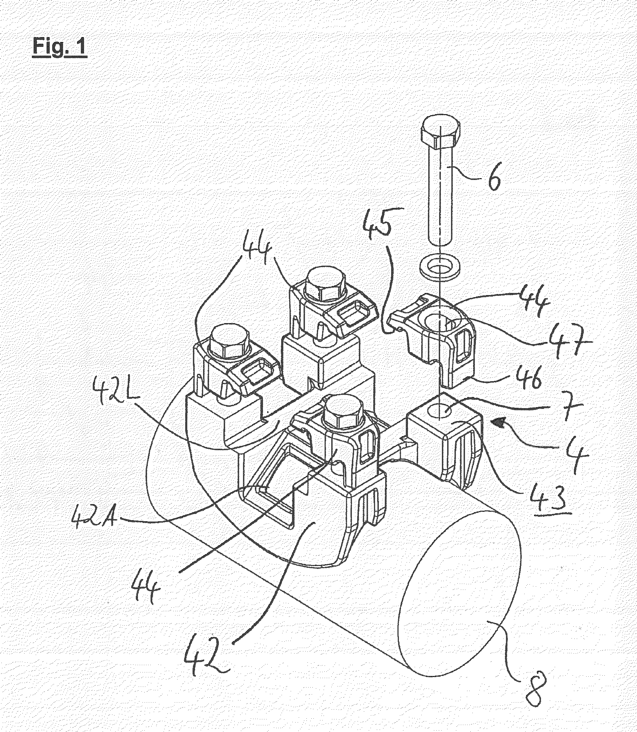

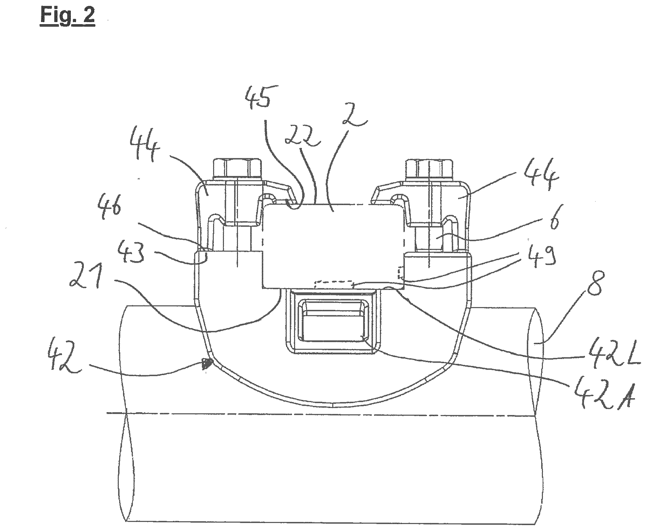

Fig. 1 zeigt eine Klemmeinheit 4, bei welcher ein Basiselement 42 der Klemmeinheit 4 an dem Achselement 8 festgelegt ist. Insbesondere bevorzugt wurde dabei das Basiselement 42 im Bereich der achsseitigen Eingriffsbereiche 42A mit dem Achselement 8 verschweißt. An dem Basiselement 42 sind weiterhin vorzugsweise vier Klemmelemente 44 angeordnet, welche über je ein Zugelement 6 an dem Basiselement 42 form- und kraftschlüssig festgelegt werden. Nicht gezeigt ist in Fig. 1 das Lenkerelement 2 (siehe beispielsweise Fig. 2), welches zwischen den Klemmelementen 44 und dem lenkerseitigen Eingriffsbereich 42L des Basiselements 42 anordenbar ist und in dieser Lage kraftschlüssig an der Klemmeinheit 4 und somit mittelbar an dem Achselement 8 festgelegt werden kann. Die Klemmelemente 44 weisen eine vorzugsweise als Langloch ausgebildete Bohrung 47 auf, durch welche das Zugelement 6 mit seinem zylindrischen Schaft hindurchreicht, um an einem nicht näher dargestellten Gewindeabschnitt 7 im Basiselement 42 in Eingriff zu gelangen und auf diese Weise das Klemmelement 44 gegen das Basiselement 42 zu zwingen. Jedes der Klemmelemente 44 weist dabei einen ersten Stützabschnitt 45 und einen zweiten Stützabschnitt 46 auf, wobei der erste Stützabschnitt 45 mit dem nicht gezeigten Lenkerelement in Eingriff gelangt und der zweite Stützabschnitt 46 an der Haltefläche 43 des Basiselements 42 in abstützenden Eingriff gelangt. Mit Vorteil ist das Basiselement 42 als einstückiger Gusskörper ausgeführt, d.h. möglichst viele seiner Geometrien sind in einem Verfahrensschritt mittels Gießen herstellbar. Mit Vorteil sind auch die einzelnen Klemmelemente 44 mittels Gussverfahren hergestellt, wobei mit Vorteil ein besonders elastisch verformbares Material, wie Sphäroguss oder speziell dafür vorgesehener Federstahlguss, für die Herstellung der Klemmelemente 44 verwendet wird.

Fig. 2 zeigt eine Ansicht einer bevorzugten Ausführungsform des erfindungsgemäßen Achssystems, in Richtung der Längsachse des Lenkerelements 2 betrachtet. Das Lenkerelement 2 weist mit Vorteil zumindest im Bereich der Festlegung durch die Klemmeinheit 4 einen rechteckigen Querschnitt auf. Weiterhin sind an dem Lenkerelement 2 eine erste Seite 21 und eine zweite Seite 22 ausgebildet. Mit seiner ersten Seite 21 stützt sich das Lenkerelement 2 vorzugsweise an dem lenkerseitigen Eingriffsbereich 42L des Basiselements 42 ab. Weiterhin ist gezeigt, dass vorzugsweise im Bereich des lenkerseitigen Eingriffsbereichs 42L der Basiseinheit eine Haltegeometrie 49 ausgebildet ist, wobei zwei mögliche Positionen für eine solche Haltegeometrie 49 gezeigt sind. Die Haltegeometrie 49 dient der Verhinderung eines Verrutschens des Lenkerelements 2 relativ zur Klemmeinheit 4 entlang der Betrachtungsrichtung, also der Längsrichtung des Lenkerelements 2. Vorzugsweise weist die Klemmeinheit 4 zwei einander bezogen auf das Lenkerelement 2 gegenüberliegende Klemmelemente 44 auf, die jeweils mit einem Zugelement 6 gegen das Basiselement 42 und die zweite Seite 22 des Lenkerelements 2 verspannt sind. Weiterhin ist der vorzugsweise als rechteckig mit gerundeten Ecken ausgebildete, achsseitige Eingriffsbereich 42A des Basiselements 42 gezeigt, in welchem eine Schweißverbindung zwischen dem Basiselement 42 und dem Achselement 8 herstellbar ist. Das Achselement 8 erstreckt sich vorzugsweise entlang einer Symmetrieachse, die orthogonal zur Längsachse des Lenkerelements 2, im Bereich der Festlegung des Lenkerelements 2 an dem Achselement 8 durch die Klemmeinheit 4, steht.

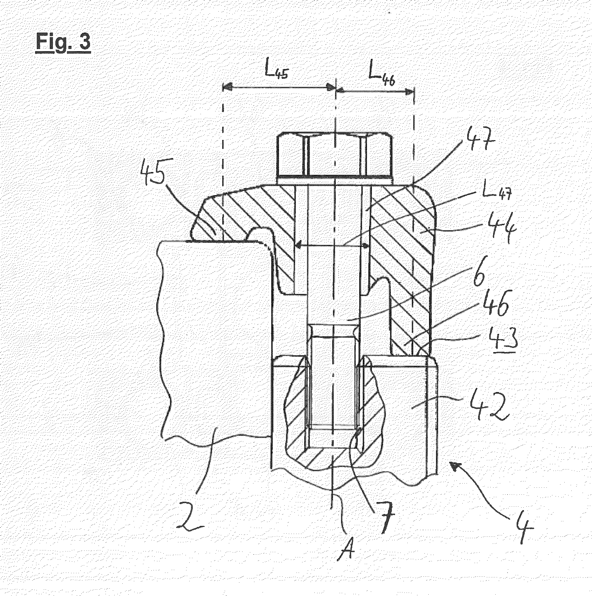

Fig. 3 zeigt eine teilweise geschnittene Detailansicht des bereits in Fig. 2 dargestellten Achssystems. Dabei ist insbesondere der Bereich des Klemmelements 44 und dessen Eingriff am Lenkerelement 2 und am Basiselement 42, sowie Details des Zugelements 6 näher dargestellt. Bevorzugt weist das Klemmelement 44 eine als Langloch ausgebildete Bohrung 47 auf, wobei die Erstreckung bzw. die längere Sehne L₄₇ der Bohrung 47 größer ist als der Durchmesser des Zugelements 6 im Bereich des Durchtritts des Zugelements 6 durch die Bohrung 47. Auf diese Weise kann eine gewisse Verschiebung oder Verschwenkung des Zugelements 6 relativ zum Klemmelement 44 innerhalb der Bohrung 47 stattfinden. Weiterhin ist dargestellt, dass vorzugsweise das Zugelement 6 nur im Bereich seines Eingriffs mit einem Gewindeabschnitt 7 ein Außengewinde aufweist und ansonsten als Zugbolzen ausgebildet ist, welcher eine im Wesentlichen zylindrische Außengeometrie aufweist. Mit Vorteil kann so bei Dehnung des Zugelements 6 eine Kerbwirkung im Außenbereich des Zugelements 6 minimiert werden. Weiterhin sind in der Figur der mittlere Abstand L₄₅ des ersten Stützabschnitts 45 von der Längsachse A des Zugelements 6 und der mittlere Abstand L₄₆ des zweiten Stützabschnitts 46 von der Längsachse A des Zugelements 6 dargestellt. Die beiden mittleren Abstände L₄₅ und L₄₆ weisen vorzugweise ein Verhältnis zueinander von 0,8 bis 1,4 auf. Bei der in Fig. 3 gezeigten, bevorzugten Ausführungsform der mittlere Abstand L₄₅ des ersten Stützabschnitts 45 etwas größer ist als der mittlere Abstand L₄₆ des zweiten Stützabschnitts, wobei das Verhältnis Größenverhältnis ca. bei 1,1 bis 1,2 liegt. Hierdurch kann im Bereich des zweiten Stützabschnitts 46 eine größere Kraft auf das Basiselement 42 übertragen werden als im ersten Stützabschnitt 45 auf das Lenkerelement 2.

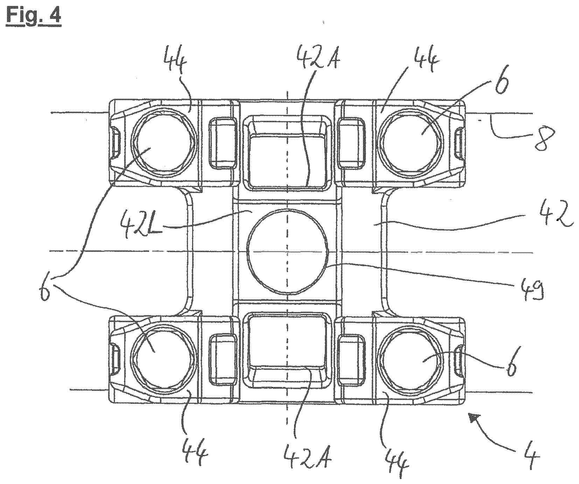

Fig. 4 zeigt eine Draufsicht auf eine bevorzugte Ausführungsform des Achssystems, wobei das Lenkerelement 2 aus Gründen der Sichtbarkeit der anderen Geometrien nicht dargestellt ist. Insbesondere ist erkennbar, dass das Basiselement 42 vorzugsweise zwei achsseitige Eingriffsbereiche 42A aufweist, welche unabhängig und beabstandet voneinander jeweils mit dem Achselement 8 verschweißbar sind. Weiterhin ist dargestellt, dass die Klemmelemente 44 vorzugsweise im Wesentlichen identisch ausgebildet sind und somit ein einziger Typ von Klemmelementen 44 für eine Vielzahl von Anwendungen zum Einsatz gelangen kann. Weiterhin ist bevorzugt der Querschnitt des Basiselements 42 doppel-T-förmig ausgebildet, wobei insbesondere das Material des Basiselements 42 an den Bereichen, in denen keine Verbindung mit dem Achselement 8 oder mit den Klemmelementen 44 hergestellt wird, eingespart wurde, um das Gewicht zu senken. An seinem lenkerseitigen Eingriffsbereich 42L weist das Basiselement 42 eine Haltegeometrie 49 auf, die vorliegend vorzugsweise als scheibenförmiger oder kreisförmiger Rücksprung ausgebildet ist. In diesem Rücksprung kann entweder das Lenkerelement 2 mit einem entsprechenden Vorsprung in Eingriff gelangen oder es wird ein zusätzliches Bauteil mit der Funktionsweise einer Federnut zwischen dem Lenkerelement 2 und dem Basiselement 42 angeordnet.

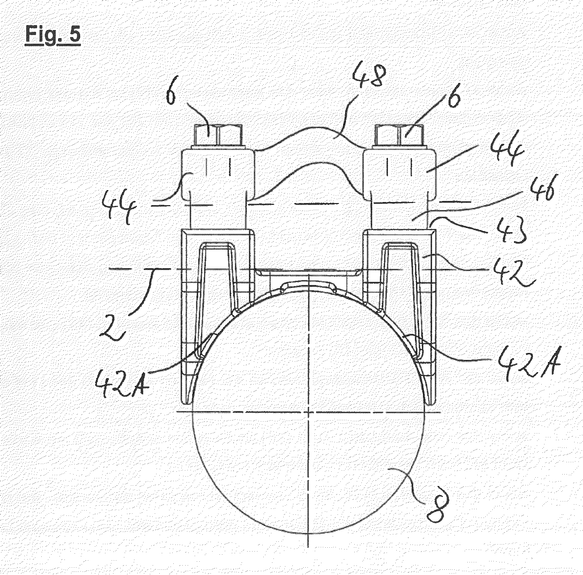

Fig. 5 zeigt eine bevorzugte Ausführungsform des erfindungsgemäßen Achssystems, wobei die Betrachtungsebene im vorliegenden Fall senkrecht zur Längserstreckungsrichtung des Achselements 8 liegt. Bevorzugt sind zwei Klemmelemente 44 über einen Federabschnitt 48 miteinander verbunden. Dabei zeigt Fig. 5 eine erste Ausführungsform des Federabschnitts 48, welcher zwei entlang der Längsrichtung des Lenkerelements 2 zueinander benachbarte Klemmelemente 44 miteinander verbindet. Alternativ zu der in Fig. 5 dargestellten Ausführungsform können auch zwei einander bezogen auf die Längsachse des Lenkerelements 2 gegenüberliegende Klemmelemente 44 über einen Federabschnitt 48 miteinander verbunden sein. Es ist bevorzugt, den achsseitigen Eingriffsbereich 42A des Basiselements 42 entsprechend der Außengeometrie des Achselements 8 gekrümmt oder gerundet auszubilden, da auf diese Weise ein möglichst vollflächiges Anliegen an dem Achselement 8 erreicht wird. Die Haltefläche 43 des Basiselements 2 und die hierzu korrespondierende Fläche des zweiten Stützabschnitts 46 sind vorzugsweise eben oder planar ausgebildet, wobei durch ein besonders großflächiges Aufeinanderliegen des zweiten Stützabschnitts 46 und der Haltefläche 43, insbesondere lokale Hertz'sche Flächenpressung vermieden werden kann und besonders hohe Druckkräfte bzw. Abstützkräfte vom Klemmelement 44 auf das Basiselement 42 übertragen werden können.

### Bezugszeichen:

- 2: - Lenkerelement
- 21: - erste Seite
- 22: - zweite Seite
- 4: - Klemmeinheit
- 42: - Basiselement
- 42A: - achsseitiger Eingriffsbereich
- 42L: - lenkerseitiger Eingriffsbereich
- 43: - Haltefläche
- 44: - Klemmelement
- 45: - erster Stützabschnitt
- 46: - zweiter Stützabschnitt
- 47: - Bohrung
- 48: - Federabschnitt
- 49: - Haltegeometrie
- 6: - Zugelement
- 7: - Gewindeabschnitt
- 8: - Achsrohr
- A: - Längsachse des Zugelements
- L₄₅: - mittlerer Abstand des ersten Stützabschnitts
- L₄₆: - mittlerer Abstand des zweiten Stützabschnitts
- L₄₇: - große Sehnenlänge der Bohrung

## Patentansprüche

1. Achssystem zum Einsatz in Nutzfahrzeugen, umfassend
ein Lenkerelement (2) und eine Klemmeinheit (4),
wobei die Klemmeinheit (4) ein Basiselement (42) und ein Klemmelement (44) aufweist,
wobei das Basiselement (42) an einem Achselement (8) festlegbar oder festgelegt ist,
**dadurch gekennzeichnet, dass** das Basiselement (42) im Wesentlichen auf einer ersten Seite (21) und das Klemmelement (44) auf der, der ersten Seite (21) gegenüberliegenden, zweiten Seite (22) des Lenkerelements (2) angeordnet ist,
wobei ein Zugelement (6) vorgesehen ist, welches ausgelegt ist, eine Zugkraft zwischen dem Klemmelement (44) und dem Basiselement (42) aufzubringen, derart, dass das Lenkerelement (2) kraftschlüssig zwischen dem Klemmelement (44) und dem Basiselement (42) gehalten ist,
wobei das Klemmelement (44) einen ersten Stützabschnitt (45) und einen zweiten Stützabschnitt (46) aufweist,
wobei der erste Stützabschnitt (45) an der zweiten Seite (22) des Lenkers (2) sich abstützend zur Anlage bringbar ist,
wobei der zweite Stützabschnitt (46) an einer Haltefläche (43) am Basiselement (42) sich abstützend zur Anlage bringbar ist,
wobei das Zugelement (6) im Wesentlichen zwischen dem ersten und dem zweiten Stützabschnitt (45, 46) an dem Klemmelement (44) in Eingriff bringbar ist.

2. Achssystem nach Anspruch 1,
wobei im montierten Zustand des Achssystems der erste Stützabschnitt (45) einen mittleren Abstand (L₄₅) von Längsachse (A) des Zugelements (6) aufweist,
wobei im montierten Zustand des Achssystems der zweite Stützabschnitt (46) einen mittleren Abstand (L₄₆) von Längsachse (A) des Zugelements (6) aufweist,
wobei das Verhältnis zwischen dem mittleren Abstand (L₄₅) des ersten Stützabschnitts (45) und dem mittleren Abstand (L₄₆) des zweiten Stützabschnitts (46) zwischen 0,8 und 1,4, vorzugsweise zwischen 0,9 und 1,2 und besonders bevorzugt bei ca. 1,1 liegt.

3. Achssystem nach einem der vorhergehenden Ansprüche,
wobei das Basiselement (42) einen achsseitigen Eingriffsbereich (42A) aufweist, welcher zur stoffschlüssigen Festlegung des Basiselements (42) am Achselement (8) ausgelegt ist.

4. Achssystem nach Anspruch 3,
wobei der achsseitige Eingriffsbereich (42A) als Schweißfenster ausgebildet ist.

5. Achssystem nach Anspruch 3 oder 4,
wobei das Basiselement (42) zwei achsseitige Eingriffsbereiche (42A) aufweist, welche voneinander getrennt und beabstandet sind,
wobei das Basiselement (42) ausschließlich in den achsseitigen Eingriffsbereichen (42A) am Achselement (8) festlegbar oder festgelegt ist.

6. Achssystem zum Einsatz in Nutzfahrzeugen, umfassend
ein Lenkerelement (2) und eine Klemmeinheit (4),
wobei die Klemmeinheit (4) ein Basiselement (42) und ein Klemmelement (44) aufweist,
wobei das Basiselement (42) an einem Achselement (8) festlegbar oder festgelegt ist,
**dadurch gekennzeichnet, dass** das Basiselement (42) im Wesentlichen auf einer ersten Seite (21) und das Klemmelement (44) auf der, der ersten Seite (21) gegenüberliegenden, zweiten Seite (22) des Lenkerelements (2) angeordnet ist,
wobei ein Zugelement (6) vorgesehen ist, welches ausgelegt ist, eine Zugkraft zwischen dem Klemmelement (44) und dem Basiselement (42) aufzubringen, derart, dass das Lenkerelement (2) kraftschlüssig zwischen dem Klemmelement (44) und dem Basiselement (42) gehalten ist,
wobei das Zugelement (6) ein Außengewinde aufweist, welches mit einem Gewindeabschnitt (7) in form- und kraftschlüssigen Eingriff bringbar ist, wobei der Gewindeabschnitt (7) am Basiselement (42) vorgesehen ist.

7. Achssystem nach einem der Ansprüche 1 - 5,
wobei das Zugelement (6) einstückig mit dem Basiselement (42) ausgeführt oder stoff- und/oder formschlüssig an dem Basiselement (42) festgelegt ist, wobei der Gewindeabschnitt (7) an einer separat vorgesehenen Mutter vorgesehen ist, welche am Klemmelement (44) in Eingriff bringbar ist.

8. Achssystem zum Einsatz in Nutzfahrzeugen, umfassend
ein Lenkerelement (2) und eine Klemmeinheit (4),
wobei die Klemmeinheit (4) ein Basiselement (42) und ein Klemmelement (44) aufweist,
wobei das Basiselement (42) an einem Achselement (8) festlegbar oder festgelegt ist,
**dadurch gekennzeichnet, dass** das Basiselement (42) im Wesentlichen auf einer ersten Seite (21) und das Klemmelement (44) auf der, der ersten Seite (21) gegenüberliegenden, zweiten Seite (22) des Lenkerelements (2) angeordnet ist,
wobei ein Zugelement (6) vorgesehen ist, welches ausgelegt ist, eine Zugkraft zwischen dem Klemmelement (44) und dem Basiselement (42) aufzubringen, derart, dass das Lenkerelement (2) kraftschlüssig zwischen dem Klemmelement (44) und dem Basiselement (42) gehalten ist,
wobei zwei Klemmelemente (44) vorgesehen sind, die einander bezogen auf das Lenkerelement (2) gegenüberliegend angeordnet und mittels je eines Zugelements (6) am Basiselement (42) festlegbar sind.

9. Achssystem nach Anspruch 8,
wobei die Klemmelemente (44) als separate Bauteile und im Wesentlichen identisch ausgebildet sind.

10. Achssystem nach Anspruch 8,
wobei die Klemmelemente (44) über einen Federabschnitt (48) miteinander verbunden sind,
wobei der Federabschnitt (48) im Vergleich zu den Klemmelementen (44) dünnwandig ausgebildet ist.

11. Achssystem nach einem der vorhergehenden Ansprüche,
wobei vier Klemmelemente (44) mittels je eines Zugelements (6) an dem Basiselement (42) festlegbar oder festgelegt sind.

12. Achssystem nach einem der vorhergehenden Ansprüche,
wobei am Klemmelement (44) eine Bohrung (47) vorgesehen ist, durch welche hindurch sich das Zugelement (6) erstreckt,
wobei die Bohrung (47) als Langloch ausgebildet ist,
wobei die längere Sehne des Langlochs eine Sehnenlänge (L₄₇) aufweist, die ein 1,1- bis 1,6-faches, vorzugsweise ein 1,1- bis 1,3-faches und besonders bevorzugt ein ca. 1,2-faches des Außendurchmessers des Zugelements (6) im Bereich der Bohrung (47) ist.

13. Achssystem nach einem der vorhergehenden Ansprüche,
wobei das Basiselement (42) eine Haltegeometrie (49) aufweist, welche im montierten Zustand mit dem Lenkerelement (2) in formschlüssigen Eingriff gelangt und ein Verlagern des Lenkerelements (2) entlang der Längsachse des Lenkerelements (2) relativ zur Klemmeinheit (4) verhindert.

14. Verfahren zur Herstellung eines Achssystems, umfassend die Schritte:
a) Bereitstellen eines Lenkerelements (2), einer Klemmeinheit (4) und eines Achselements (8);
b) Verbinden eines Basiselements (42) der Klemmeinheit (4) mit dem Achselement (8);
c) Platzieren des Lenkerelements (2) an dem Basiselement (42);
d) Bereitstellen eines Klemmelements (44) der Klemmeinheit (4), welches einen ersten Stützabschnitt (45) und einen zweiten Stützabschnitt (46) aufweist, und
e) Verklemmen des Klemmelements (44) gegen das Lenkerelement (2) mittels eines mit dem Basiselement (42) in Eingriff stehenden Zugelements (6), derart, dass der erste Stützabschnitt (45) an einer zweiten Seite (22) des Lenkers (2) sich abstützend zur Anlage gelangt und der zweite Stützabschnitt (46) an einer Haltefläche (43) am Basiselement (42) sich abstützend zur Anlage gelangt.

## Claims

1. An axle system for use in utility vehicles, comprising
a suspension arm (2) and a clamping unit (4),
wherein the clamping unit (4) has a base element (42) and a clamping element (44),
wherein the base element (42) is or can be secured to an axle element (8), **characterized in that** the base element (42) is substantially arranged on a first side (21) and the clamping element (44) on the second side (22) of the suspension arm (2) lying opposite the first side (21),
wherein a tensile element (6) is provided which is designed to apply a tensile force between the clamping element (44) and the base element (42), such that the suspension arm (2) is held by force fit between the clamping element (44) and the base element (42),
wherein the clamping element (44) has a first supporting portion (45) and a second supporting portion (46),
wherein the first supporting portion (45) can be brought to rest on the second side (22) of the suspension arm (2),
wherein the second supporting portion (46) can be brought to rest on a holding face (43) of the base element (42),
wherein the tensile element (6) can be brought into engagement on the clamping element (44) substantially between the first and second supporting portions (45, 46).

2. The axle system as claimed in claim 1,
wherein in mounted state of the axle system, the first supporting portion (45) has a mean distance (L₄₅) from the longitudinal axis (A) of the tensile element (6),
wherein in mounted state of the axle system, the second supporting portion (46) has a mean distance (L₄₆) from the longitudinal axis (A) of the tensile element (6),
wherein the ratio between the mean distance (L₄₅) of the first supporting portion (45) and the mean distance (L₄₆) of the second supporting portion (46) lies between 0.8 and 1.4, preferably between 0.9 and 1.2, and particularly preferably around 1.1.

3. The axle system as claimed in any of the preceding claims,
wherein the base element (42) has an axle-side engagement region (42A) which is configured for substance-bonded fixing of the base element (42) to the axle element (8).

4. The axle system as claimed in claim 3,
wherein the axle-side engagement region (42A) is configured as a welding window.

5. The axle system as claimed in claim 3 or 4,
wherein the base element (42) has two axle-side engagement regions (42A) which are separate and spaced apart from each other,
wherein the base element (42) is or can be fixed to the axle element (8) exclusively in the axle-side engagement regions (42A).

6. The axle system for use in utility vehicles, comprising
a suspension arm (2) and a clamping unit (4),
wherein the clamping unit (4) comprises a base element (42) and a clamping element (44),
wherein the base element (42) is fixable or fixed to an axle element (8), **characterized in that** the base element (42) is arranged substantially on a first side (21) and the clamping element (44) is arranged on the second side (22) of the suspension arm (2) opposite the first side (21),
wherein a tensile element (6) is provided which is designed to apply a tensile force between the clamping element (44) and the base element (42) in such a way that the suspension arm (2) is held in a force-fitting manner between the clamping element (44) and the base element (42),
wherein the tensile element (6) has an external thread which can be brought into form fitting and force fitting engagement with a threaded portion (7), wherein the threaded portion (7) is provided on the base element (42).

7. The axle system as claimed in claim 6,
wherein the tensile element (6) is formed integrally with the base element (42) or is fixed to the base element (42) by substance bonding and/or by form fit, wherein the threaded portion (7) is provided on a nut provided separately which can be brought into engagement on the clamping element (44).

8. The axle system for use in utility vehicles, comprising
a suspension arm (2) and a clamping unit (4),
wherein the clamping unit (4) comprises a base element (42) and a clamping element (44),
wherein the base element (42) is fixable or fixed to an axle element (8), **characterized in that** the base element (42) is arranged substantially on a first side (21) and the clamping element (44) is arranged on the second side (22) of the suspension arm (2) opposite the first side (21),
wherein a tensile element (6) is provided, which is designed to apply a tensile force between the clamping element (44) and the base element (42) in such a way that the suspension arm (2) is held in a force-locking manner between the clamping element (44) and the base element (42),
wherein two clamping elements (44) are provided which are arranged opposite each other relative to the suspension arm (2) and can be fixed to the base element (42) by means of a respective tensile element (6).

9. The axle system as claimed in claim 8,
wherein the clamping elements (44) are formed as separate components and are substantially identical.

10. The axle system as claimed in claim 8,
wherein the clamping elements (44) are connected together via a spring portion (48),
wherein the spring portion (48) is formed with a thin wall compared to the clamping elements (44).

11. The axle system as claimed in any of the preceding claims,
wherein four clamping elements (44) are or can be fixed to the base element (42) by means of a respective tensile element (6).

12. The axle system as claimed in any of the preceding claims,
wherein a bore (47), through which the tensile element (6) extends, is provided on the clamping element (44),
wherein the bore (47) is configured as a slot,
wherein the longer chord of the slot has a chord length (L₄₇) which is 1.1 to 1.6 times, preferably 1.1 to 1.3 times, and particularly preferably around 1.2 times the outer diameter of the tensile element (6) in the region of the bore (47).

13. The axle system as claimed in any of the preceding claims,
wherein the base element (42) has a holding geometry (49) which in mounted state comes into form-fit engagement with the suspension arm (2) and prevents a shift of the suspension arm (2) relative to the clamping unit (4) along the longitudinal axis of the suspension arm (2).

14. A method for production of an axle system comprising the steps:
a) provision of a suspension arm (2), a clamping unit (4) and an axle element (8);
b) connection of a base element (42) of the clamping unit (4) to the axle element (8);
c) placing of the suspension arm (2) on the base element (42);
d) providing a clamping element (44) of the clamping unit (4) having a first supporting portion (45) and a second supporting portion (46), and
e) clamping the clamping element (44) against the suspension arm (2) by means of a tensile element (6) engaged with the base element (42) in such a way that the first supporting portion (45) comes to bear against a second side (22) of the suspension arm (2) and the second supporting portion (46) comes to bear against a holding face (43) on the base element (42).

## Revendications

1. Système d'essieu destiné à l'utilisation dans des véhicules utilitaires, comportant un élément formant bras oscillant (2) et une unité de serrage (4), dans lequel
l'unité de serrage (4) comprend un élément de base (42) et un élément de serrage (44), l'élément de base (42) étant immobilisé ou susceptible d'être immobilisé sur un élément d'essieu (8),
**caractérisé en ce que** l'élément de base (42) est agencé sensiblement sur un premier côté (21) et l'élément de serrage (44) est agencé sensiblement sur un second côté (22), opposé au premier côté (21), de l'élément formant bras oscillant (2),
il est prévu un élément de traction (6) qui est conçu pour appliquer une force de traction entre l'élément de serrage (44) et l'élément de base (42), de telle sorte que l'élément formant bras oscillant (2) est retenu par coopération de force entre l'élément de serrage (44) et l'élément de base (42),
l'élément de serrage (44) comprend une première portion de soutien (45) et une seconde portion de soutien (46),
la première portion de soutien (45) peut être amenée en contact de soutien contre le second côté (22) du bras oscillant (2),
la seconde portion de soutien (46) peut être amenée en contact de soutien contre l'élément de base (42) une surface de retenue (43),
l'élément de traction (6) peut être amené en engagement sur l'élément de serrage (44) sensiblement entre la première et la seconde portion de soutien (45, 46).

2. Système d'essieu selon la revendication 1,
dans lequel, dans l'état monté du système d'essieu, la première portion de soutien (45) présente une distance moyenne (L₄₅) vis-à-vis de l'axe longitudinal (A) de l'élément de traction (6),
dans l'état monté du système d'essieu, la seconde portion de soutien (46) présente une distance moyenne (L₄₆) vis-à-vis de l'axe longitudinal (A) de l'élément de traction (6),
le rapport entre la distance moyenne (L₄₅) de la première portion de soutien (45) et la distance moyenne (L₄₆) de la seconde portion de soutien (46) est compris entre 0,8 et 1 4, de préférence entre 0,9 et 1,2 et de manière particulièrement préférée il est d'environ 1,1.

3. Système d'essieu selon l'une des revendications précédentes,
dans lequel l'élément de base (42) présente une zone d'engagement (42A) côté essieu, qui est conçue pour l'immobilisation par coopération de matière de l'élément de base (42) sur l'élément d'essieu (8).

4. Système d'essieu selon la revendication 3,
dans lequel la zone d'engagement (42A) côté essieu est réalisée sous la forme d'une fenêtre servant au soudage.

5. Système d'essieu selon la revendication 3 ou 4,
dans lequel l'élément de base (42) comprend deux zones d'engagement (42A) côté essieu, qui sont séparées et espacées l'une de l'autre,
l'élément de base (42) est immobilisé ou susceptible d'être immobilisé sur l'élément d'essieu (8) exclusivement dans les zones d'engagement (42A) côté essieu.

6. Système d'essieu destiné à l'utilisation dans des véhicules utilitaires, comportant un élément formant bras oscillant (2) et une unité de serrage (4), dans lequel
l'unité de serrage (4) comprend un élément de base (42) et un élément de serrage (44), l'élément de base (42) étant immobilisé ou susceptible d'être immobilisé sur un élément d'essieu (8),
**caractérisé en ce que** l'élément de base (42) est agencé sensiblement sur un premier côté (21) et l'élément de serrage (44) est agencé sensiblement sur un second côté (22), opposé au premier côté (21), de l'élément formant bras oscillant (2),
il est prévu un élément de traction (6) qui est conçu pour appliquer une force de traction entre l'élément de serrage (44) et l'élément de base (42), de telle sorte que l'élément formant bras oscillant (2) est retenu par coopération de force entre l'élément de serrage (44) et l'élément de base (42),
l'élément de traction (6) comprend un filetage qui est susceptible d'être amené en engagement par coopération de forme et de force avec une portion taraudée (7),
la portion taraudée (7) est prévue sur l'élément de base (42).

7. Système d'essieu selon l'une des revendications 1 à 5,
dans lequel l'élément de traction (6) est réalisé d'un seul tenant avec l'élément de base (42) ou est immobilisé par coopération de matière et/ou de forme sur l'élément de base (42),
la portion taraudée (7) est prévue sur un écrou prévu séparément qui est susceptible d'être amené en engagement sur l'élément de serrage (44).

8. Système d'essieu destiné à l'utilisation dans des véhicules utilitaires, comportant un élément formant bras oscillant (2) et une unité de serrage (4), dans lequel
l'unité de serrage (4) comprend un élément de base (42) et un élément de serrage (44), l'élément de base (42) étant immobilisé ou susceptible d'être immobilisé sur un élément d'essieu (8),
**caractérisé en ce que** l'élément de base (42) est agencé sensiblement sur un premier côté (21) et l'élément de serrage (44) est agencé sensiblement sur un second côté (22), opposé au premier côté (21), de l'élément formant bras oscillant (2),
il est prévu un élément de traction (6) qui est conçu pour appliquer une force de traction entre l'élément de serrage (44) et l'élément de base (42), de telle sorte que l'élément formant bras oscillant (2) est retenu par coopération de force entre l'élément de serrage (44) et l'élément de base (42),
il est prévu deux éléments de serrage (44) qui sont agencés à l'opposé l'un de l'autre par rapport à l'élément formant bras oscillant (2) et qui sont chacun susceptibles d'être immobilisés sur l'élément de base (42) par un élément de traction respectif (6).

9. Système d'essieu selon la revendication 8,
dans lequel les éléments de serrage (44) sont réalisés sous forme de composants séparés et sensiblement identiques.

10. Système d'essieu selon la revendication 8,
dans lequel les éléments de serrage (44) sont reliés l'un à l'autre par une portion formant ressort (48),
la portion formant ressort (48) est réalisée avec une paroi mince par comparaison aux éléments de serrage (44).

11. Système d'essieu selon l'une des revendications précédentes,
dans lequel quatre éléments de serrage (44) sont immobilisés ou susceptibles d'être immobilisés sur l'élément de base (42) chacun à l'aide d'un élément de traction respectif (6).

12. Système d'essieu selon l'une des revendications précédentes,
dans lequel un perçage (47) est ménagé sur l'élément de serrage (44), qui est traversé par l'élément de traction (6),
le perçage (47) est réalisé sous forme de trou oblong,
le grand côté du trou oblong présente une longueur (L₄₇) qui est 1,1 à 1,6 fois, de préférence 1,1 à 1,3 fois et de manière particulièrement préférée d'environ 1,2 fois le diamètre extérieur de l'élément de traction (6) au niveau du perçage (47).

13. Système d'essieu selon l'une des revendications précédentes,
dans lequel l'élément de base (42) présente une géométrie de retenue (49) qui, dans l'état monté, vient en engagement par coopération de forme avec l'élément formant bras oscillant (2) et qui empêche un déplacement de l'élément formant bras oscillant (2) le long de l'axe longitudinal de l'élément formant bras oscillant (2) par rapport à l'unité de serrage (4).

14. Procédé pour réaliser un système d'essieu, comprenant les étapes consistant à :
a) fournir un élément formant bras oscillant (2), une unité de serrage (4) et un élément d'essieu (8) ;
b) relier un élément de base (42) de l'unité de serrage (4) à l'élément d'essieu (8);
c) placer l'élément formant bras oscillant (2) sur l'élément de base (42) ;
d) fournir un élément de serrage (44) de l'unité de serrage (4), lequel comprend une première portion de soutien (45) et une seconde portion de soutien (46), et
e) serrer l'élément de serrage (44) contre l'élément formant bras oscillant (2) à l'aide d'un élément de traction (6) qui est en engagement avec l'élément de base (42), de telle sorte que la première portion de soutien (45) vient en contact de soutien contre un second côté (22) du bras oscillant (2) et que la seconde portion de soutien (46) vient en contact de soutien contre une surface de retenue (43) sur l'élément de base (42).
